Europäisches Patentamt

European Patent Office

Office européen des brevets

(19)

(11) EP 0 692 907 B1

(12) **FASCICULE DE BREVET EUROPEEN**

(45) Date de publication et mention
de la délivrance du brevet:
**08.09.1999 Bulletin 1999/36**

(51) Int Cl.⁶: **H04N 3/15**

(21) Numéro de dépôt: **95401604.4**

(22) Date de dépôt: **04.07.1995**

(54) **Circuit de suppression de courant d'obscurité de photodétecteur**

Schaltung zur Unterdrückung des Dunkelstromes eines Photodetektors

Circuit for suppressing the dark current of a photodetector

(84) Etats contractants désignés:
**DE FR GB IT NL**

(30) Priorité: **12.07.1994 FR 9408632**

(43) Date de publication de la demande:
**17.01.1996 Bulletin 1996/03**

(73) Titulaire: **THOMSON-CSF SEMICONDUCTEURS SPECIFIQUES**
**75008 Paris (FR)**

(72) Inventeur: **Dautriche, Pierre**
**F-92402 Courbevoie Cedex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 361 000          US-A- 4 839 735**
**US-A- 4 945 418**

- **Halbleiter-Schaltung-Technik (ISBN 3-540-19475-4) 1989 Neunte, neu bearbeitete und erweitete Auflage U. Tietze, Ch. Schenk Chapitre 6.3 Photodiode (pages 106-108)**

## Description

La présente invention concerne un photodétecteur et plus particulièrement un circuit de lecture de courant de photodiode permettant de supprimer le mieux possible le courant d'obscurité de photodétecteur.

Les photodétecteurs, tels que ceux utilisés par exemple en imagerie visible ou infrarouge, sont constitués de deux principaux éléments: un élément photosensible et un multiplexeur. L'élément photosensible est constitué de photodiodes agencées sous forme de barrettes ou de matrices et permettant de générer des charges par effet photoélectrique. Le multiplexeur convertit et transmet les charges ainsi générées en produisant un signal électrique utile.

Selon l'art antérieur, chaque photodiode est polarisée en inverse à une tension relativement élevée. Il s'en suit que le courant inverse qui parcourt la diode en l'absence de rayonnement, communément appelé courant d'obscurité, est lui aussi relativement élevé. En présence d'un rayonnement de faible amplitude, le signal détecté contient alors un fort niveau de bruit. Ceci est bien sûr un inconvénient.

Un autre inconvénient consiste en ce que les différentes photodiodes qui constituent la barrette ou la matrice ne sont pas parfaitement identiques.

Il s'en suit que leurs courants d'obscurité ont des valeurs différentes. Il est alors nécessaire d'effectuer une opération de calibration du détecteur de façon à prendre en compte cette dispersion. Cette opération de calibration est une opération fastidieuse.

L'invention ne présente pas ces inconvénients.

La présente invention a pour objet un photodétecteur comportant des moyens permettant de supprimer le courant d'obscurité et donc le bruit de détection associé à ce courant d'obscurité.

Selon l'invention, au lieu d'alimenter la photodiode par une tension de polarisation négative, on connecte aux bornes de la photodiode une charge non linéaire agissant en limiteur de tension, qui tend à maintenir la polarisation de la diode au voisinage de zéro volt, on recopie, par un circuit de recopie du type miroir de courant, le courant dans la charge non linéaire, et on mesure le courant ainsi recopié. La photodiode n'est pas alimentée par une source de tension comme dans l'art antérieur; la tension de polarisation qui s'établit à ses bornes est due uniquement à l'énergie photoélectrique engendrée par la photodiode.

Grâce à ce montage, le courant d'obscurité est faible car la photodiode reste toujours polarisée à une tension très faible pour laquelle le courant d'obscurité est minimal; ce courant reste faible aussi bien en début d'une phase de mesure d'éclairement qu'à la fin de cette phase. Dans l'art antérieur, la polarisation initiale de la photodiode provoquait un courant d'obscurité élevé, et de plus la valeur du courant d'obscurité variait entre le début de la phase de mesure et la fin de la phase de mesure, la variation étant d'ailleurs fonction de l'éclairement. Le courant d'obscurité moyen pendant la mesure était d'autant plus grand que l'éclairement mesuré était faible, ce qui est particulièrement néfaste. Ces inconvénients sont éliminés par l'invention.

On a déjà proposé des photodétecteurs dont le circuit de lecture comporte des moyens pour limiter le courant d'obscurité. Dans le brevet US 4 945 418, la photodiode est reliée à la grille d'un transistor MOS et charge cette grille. Cependant, le point de polarisation de la photodiode varie dans le temps, ce qui n'est pas souhaitable, puisque la photodiode se charge progressivement. Dans le livre "Halbleiter-Schaltungs-technik (ISBN 3-540-19475-4) 1989 Neunte, neu bearbeite und erweiterte Auflage U.Tietze, Ch. Schenk Chapitre 6.3 Photodiode (pages 106-108), on essaye de maintenir autour de zéro volt la polarisation de la photodiode, en vue de réduire le courant d'obscurité, mais le montage proposé nécessite un amplificateur opérationnel. Il n'utilise pas de miroir de courant pour recopier le courant dans la photodiode.

On propose donc selon l'invention un photodétecteur comprenant au moins une diode photosensible et un circuit de lecture du courant engendré par la photodiode, le circuit de lecture comportant une charge non linéaire connectée aux bornes de la photodiode et apte à limiter la tension aux bornes de la photodiode, caractérisée en ce que la charge est constituée par un premier transistor à effet de champ dont la grille est reliée au drain et à une première borne de la photodiode et dont la source est reliée à la deuxième borne de la photodiode, et en ce qu'il comporte par ailleurs un deuxième transistor monté en miroir de courant avec le premier pour recopier le courant dans le premier transistor, et un circuit de lecture du courant recopié dans le deuxième transistor.

La grille et le drain du premier transistor sont reliées à l'anode de la photodiode si le transistor est à canal N, à sa cathode pour un transistor à canal P.

Le deuxième transistor est en principe de même type et de dimensions égales ou proportionnelles au premier, et sa grille et sa source sont reliées respectivement à la grille et à la source du premier.

Le circuit de mesure du courant recopié peut comporter alors simplement une capacité d'intégration alimentée par le circuit de recopie, et un interrupteur commandé périodiquement pour décharger la capacité avant chaque nouvelle lecture.

L'invention est intéressante essentiellement dans le cas de barrettes ou matrices de plusieurs photodiodes, un circuit de lecture respectif étant associé à chaque photodiode. Elle s'applique tout particulièrement aux détecteurs infrarouge.

D'autres caractéristiques et avantages de l'invention apparaîtront à la lecture d'un mode de réalisation préférentiel fait avec référence aux figures ci-annexées parmi lesquelles :

- la figure 1 représente le schéma électrique de principe d'un circuit détecteur selon l'art antérieur ;
- la figure 2 représente le schéma électrique de principe d'un circuit détecteur selon l'invention.

Sur toutes les figures les mêmes repères désignent les mêmes éléments.

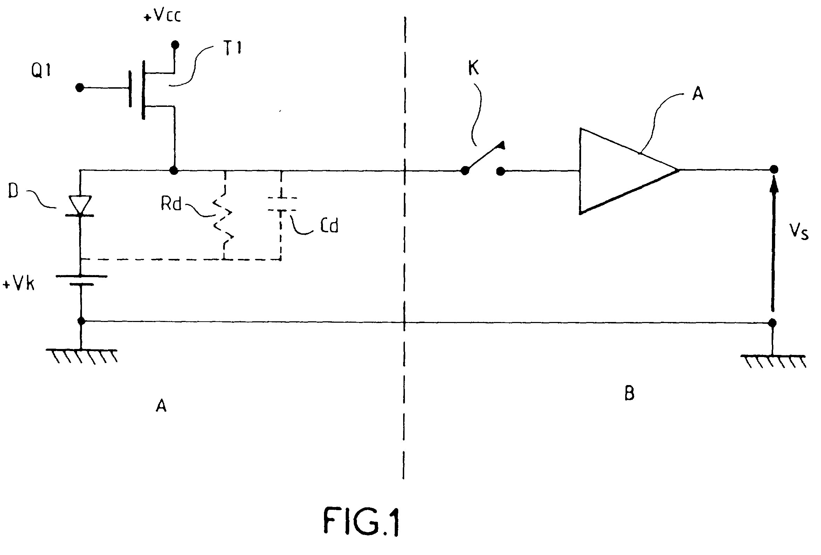

La figure 1 représente le schéma électrique de principe d'un circuit détecteur selon l'art antérieur.

Ce circuit ne comprend qu'une seule photodiode D. Comme cela a été mentionné précédemment, les détecteurs se présentent sous forme de barrettes ou de matrices. Ils comprennent donc plusieurs photodiodes. C'est pour des raisons de simplicité de représentation que le circuit ne comprend qu'une seule photodiode.

La figure 1 est séparée en deux zones. Dans une première zone A sont représentés les éléments situés dans la partie photosensible du détecteur. Une photodiode D, dont les éléments du schéma équivalent Rd et Cd sont représentés en traits pointillés, a son anode reliée à une tension de polarisation positive +Vcc par l'intermédiaire d'un transistor T1 commandé par le signal Q1 et sa cathode reliée à une tension positive + Vk supérieure à Vcc.

Dans une deuxième zone B sont représentés les éléments du circuit électrique situés dans le multiplexeur et permettant de récupérer l'information aux bornes de la photodiode. Ces éléments sont constitués d'un interrupteur K et d'un amplificateur A. L'interrupteur K relie l'anode de la photodiode à l'entrée de l'amplificateur A. La tension de sortie Vs du détecteur est prise entre la sortie de l'amplificateur A et la masse du circuit.

Comme cela est connu de l'homme de l'art, la tension positive +Vcc est appliquée à l'anode de la photodiode D sous l'effet de la commande Q1. La capacité Cd de la photodiode se trouve alors chargée par application à ses bornes de la tension inverse Vinv = Vk - Vcc. L'interrupteur K étant ouvert, une décharge de la capacité Cd s'opère alors. Le point de fonctionnement de la photodiode est modifié lors de cette décharge : il décrit la caractéristique courant/tension de la photodiode. Le courant qui parcourt la photodiode est un courant inverse constitué du courant d'obscurité et, dans le cas ou la diode est éclairée, d'un photocourant. Lorsque l'interrupteur K est fermé, la tension échantillonnée est amplifiée par l'amplificateur A.

Comme cela a été mentionné précédemment, ceci présente de nombreux inconvénients. En particulier, les photodiodes de type III/V telles que les photodiodes de type InGaAs présentent de forts courants d'obscurité lorsqu'elles sont polarisées en inverse. Les modifications de leur point de polarisation sont alors importantes et entraînent, par la même, une variation importante des courants d'obscurité. Plus particulièrement, dans le cas des détecteurs de type InGaAs où on lit des charges positives, la photodiode D se trouve fortement dépolarisée afin de pouvoir stocker une charge maximale. Cette dépolarisation provoque alors une forte tension d'obscurité limitant la résolution à bas niveau du détecteur.

D'autre part, le bruit d'échantillonnage dû à la commutation de la tension +Vcc appliquée à intervalles réguliers sur la capacité Cd est relativement élevé. Le niveau N de ce bruit s'exprime approximativement par la formule : $N = 400\sqrt{Cd}$. La capacité Cd ayant une valeur de l'ordre de 0,5 pF, le niveau de bruit N peut être évalué à 280 électrons.

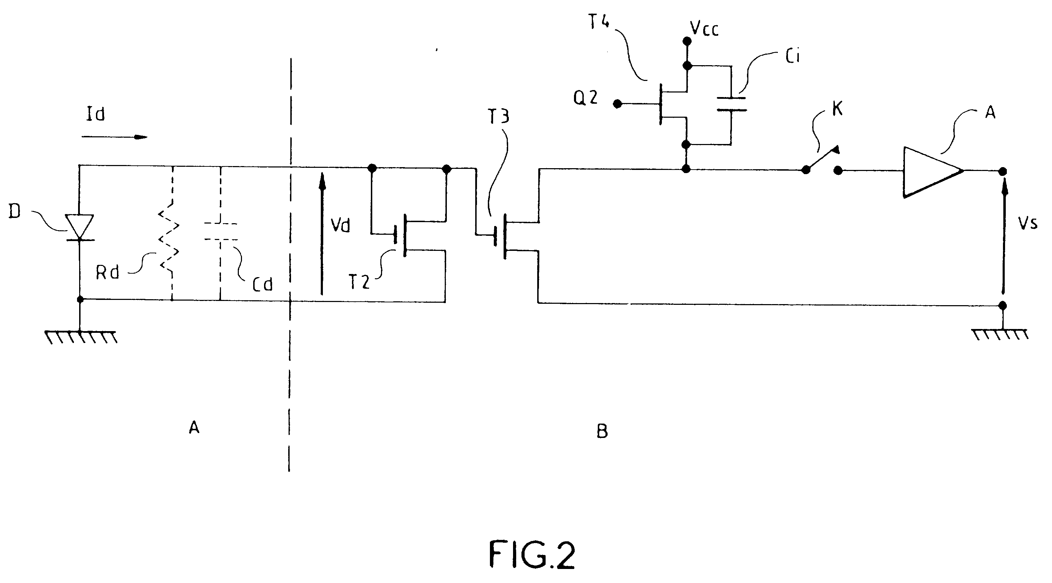

La figure 2 représente le schéma électrique de principe d'un circuit détecteur selon l'invention.

Pour les mêmes raisons que celles données précédemment, le circuit représenté en figure 2 ne comprend qu'une seule diode D bien que l'invention concerne des détecteurs possédant plusieurs photodiodes agencées sous forme de barrettes ou de matrices.

De même que pour la figure 1, la figure 2 est séparée en deux zones A et B. Dans une première zone A est représentée la photodiode D dont les éléments du schéma équivalent Rd et Cd sont représentés en traits pointillés. Dans une deuxième zone B sont représentés les éléments du circuit électrique permettant de récupérer l'information aux bornes de la photodiode. Les éléments de la zone B sont constitués de 3 transistors T2, T3, T4, d'une capacité d'intégration Ci, d'un interrupteur K et d'un amplificateur A.

Le transistor MOS T2, par exemple de type NMOS, est monté en parallèle de la diode D.

Le transistor T2 a son drain et sa grille reliés entre eux et à l'anode de la photodiode D, et sa source reliée à la fois à la cathode de la photodiode et à la masse du circuit. Le transistor T3 a sa grille reliée à la grille du transistor T2 et son drain relié d'une part à une tension +Vcc, par exemple $+5^V$, par l'intermédiaire d'un transistor T4 et d'autre part à l'une des bornes d'un interrupteur K dont l'autre borne est reliée à l'entrée d'un amplificateur A. La source du transistor T3 est reliée quant à elle à la masse du circuit. La capacité d'intégration Ci est montée en parallèle du transistor T4.

De même que dans l'art antérieur, la tension de sortie du détecteur est prise entre la sortie de l'amplificateur A et la masse du circuit.

Selon l'invention, aucune tension inverse n'est appliquée à la photodiode D, laquelle se trouve donc portée au potentiel zéro par sa résistance Rd. Un avantage de l'invention est donc la suppression du courant d'obscurité qui, selon l'art antérieur, parcourt la diode du fait de la polarisation inverse qui lui est appliquée. Lorsque la photodiode est éclairée, un photocourant circule dans le circuit constitué par la photodiode D et le transistor T2. La photodiode fonctionne alors comme un générateur de courant débitant dans la charge que constitue le transistor T2.

Le transistor T2 est choisi avec une tension de seuil relativement élevée, par exemple de l'ordre de 0,7 volts, de façon à travailler dans la zone de caractéristique connue de l'homme de l'art sous le nom de zone de faible inversion. Le courant Id parcourant le transistor est alors relié à la tension Vd qui est à ses bornes par la relation :

$$Id = Is \, exp \, \frac{qVd}{kT}$$

avec

Is = courant de saturation du transistor
q = charge de l'électron
k = constante de Boltzman
T = Température absolue du transistor

La tension Vd appliquée à la grille du transistor T2 est alors donnée en fonction du photocourant Id par la relation :

$$Vd = \frac{kT}{q} \, Log \, \frac{Id}{I_s}$$

Un avantage de l'invention est de faire varier la tension Vd de façon logarithmique en fonction du photocourant Id, permettant ainsi de limiter les variations de la tension Vd en fonction du courant Id.

Le courant de saturation Is est proportionnel au rapport de la largeur de grille sur la longueur de grille du transistor. La géométrie du transistor T2 est alors choisie de façon que la tension Vd se stabilise à une valeur donnée, par exemple égale à 0,1 volt.

Comme cela a été mentionné précédemment, les grilles des transistors T2 et T3 sont reliées l'une à l'autre.

La tension Vd présente aux bornes de la diode D est donc appliquée à la grille du transistor T3. Ce dernier a des dimensions proportionnelles à celles du transistor T2. Le facteur de proportionalité k est un nombre positif inférieur, supérieur ou égal à 1. Le transistor T3 constitue donc un miroir de courant du transistor T2. Il s'en suit que le courant I qui parcourt le transistor T3 a une intensité égale à kId. Un avantage de l'invention est donc de permettre de fournir un gain en courant dans le cas où k est supérieur à 1, ou encore une atténuation en courant dans le cas où k est inférieur à 1.

L'interrupteur K étant ouvert, le courant Id qui parcourt le transistor T3 vient alors charger la capacité d'intégration Ci, celle-ci ayant préalablement été déchargée par mise en court-circuit sous l'effet de la commande Q2 appliquée sur la grille du transistor T4. Lorsque l'interrupteur K est fermé, la tension détectée est amplifiée par l'amplificateur A.

Un avantage de l'invention est de supprimer le courant d'obscurité et donc le bruit de détection associé à ce courant d'obscurité. Un autre avantage de l'invention consiste à diminuer le bruit dû à la commutation de la tension appliquée sur la capacité d'intégration. Comme cela a été rappelé précédemment, le niveau N de ce bruit s'exprime par la formule

$$N = 400 \sqrt{Ci}$$

Selon l'invention, la valeur de la capacité Ci peut être choisie, par exemple, de l'ordre de 0,05 pF. Avantageusement le niveau de bruit de commutation est alors ramené à environ 100 électrons.

Selon l'exemple de réalisation choisi, les transistors T2 et T3 sont de type NMOS et la photodiode D a sa cathode reliée à la masse du dispositif et son anode reliée à la grille et au drain du transistor T2.

L'invention concerne cependant d'autres modes de réalisation où les transistors T2 et T3 sont de type PMOS et où la photodiode D a son anode reliée à la masse du dispositif et sa cathode reliée à la grille et au drain du transistor T2.

La présente invention s'applique à tout type de détecteur et plus particulièrement aux détecteurs infrarouges dont l'élément photosensible est constitué de photodiodes agencées sous forme matricielle couplées aux circuits électriques de détection contenus dans le multiplexeur par des billes d'indium.

A titre d'exemple de réalisation mettant en oeuvre la présente invention on peut citer une barrette de photodétecteurs infrarouges à base d'un matériau ternaire GaInAs reliée à l'étage d'entrée décrit ci-dessus, lequel est lui-même relié à un registre CCD chargé de transférer les charges lues par le photodétecteur vers le circuit de traitement de l'information.

**Revendications**

1. Photodétecteur comprenant au moins une diode photosensible (D) et un circuit de lecture du courant engendré par la photodiode, le circuit de lecture comportant une charge non linéaire (T2) connectée aux bornes de la photodiode et apte à limiter la tension aux bornes de la photodiode, caractérisé en ce que la charge est constituée par un premier transistor à effet de champ (T2) dont la grille est reliée au drain et à une première borne de la photodiode et dont la source est reliée à la deuxième borne de la photodiode, et en ce qu'il comporte par ailleurs un deuxième transistor (T3) monté en miroir de courant avec le premier pour recopier le courant dans le premier transistor, et un circuit de lecture (Ci, Q2, K, A) du courant recopié dans le deuxième transistor.

2. Photodétecteur selon la revendication 1, caractérisé en ce que lesdites première et deuxième bornes sont respectivement l'anode et la cathode de la photodiode, et en ce que les premier et deuxième transistors (T2, T3) sont des transistors MOS de type N.

3. Photodétecteur selon la revendication 2, caractérisé en ce que lesdites première et deuxième bornes sont respectivement la cathode et l'anode de la photodiode et en ce que lesdits premier et deuxième transistors (T2, T3) sont des transistors MOS de type P.

4. Photodétecteur selon l'une des revendications 1 à 3, caractérisé en ce que le deuxième transistor (T3) est de même type que le premier et de dimensions égales ou proportionnelles au premier, et a sa grille et sa source reliées respectivement à la grille et à la source du premier.

5. Photodétecteur selon l'une des revendications 1 à 4, caractérisé en ce que ledit premier transistor (T2) est choisi de façon à travailler dans la zone de caractéristique dite de faible inversion.

6. Photodétecteur selon l'une des revendications 1 à 5, caractérisé en ce que le circuit de mesure du courant recopié comporte une capacité d'intégration (Ci) alimentée par le deuxième transistor, et un interrupteur (K) commandé périodiquement pour décharger la capacité avant chaque nouvelle lecture.

7. Photodétecteur selon la revendication 6, caractérisé en ce qu'un transistor (T4) est monté en parallèle de ladite capacité d'intégration (Ci) de façon à décharger celle-ci préalablement à la charge due au courant qui parcourt ledit deuxième transistor (T3).

8. Photodétecteur selon l'une quelconque des revendications précédentes, caractérisé en ce que les photodiodes (D) sont agencées sous forme de barrettes.

9. Photodétecteur selon l'une quelconque des revendications précédentes, caractérisé en ce que les photodiodes (D) sont agencées sous forme de matrices.

**Patentansprüche**

1. Photodetektor mit wenigstens einer lichtempfindlichen Diode (D) und einer Leseschaltung für den von der Photodiode erzeugten Strom, wobei die Leseschaltung eine nichtlineare Last (T2) aufweist, die mit den Anschlüssen der Photodiode verbunden und zur Begrenzung der Spannung an den Anschlüssen der Photodiode geeignet ist, dadurch gekennzeichnet, daß die Last durch einen ersten Feldeffekttransistor (T2) gebildet ist, dessen Gate-Anschluß mit dem Drain-Anschluß und einem ersten Anschluß der Photodiode verbunden ist, und dessen Source-Anschluß mit dem zweiten Anschluß der Photodiode verbunden ist, und daß er ferner einen zweiten Transistor (T3), der als Stromspiegel mit dem ersten geschaltet ist, um den Strom in dem ersten Transistor zu kopieren, sowie eine Leseschaltung (Ci, Q2, K, A) für den in dem zweiten Transistor kopierten Strom aufweist.

2. Photodetektor nach Anspruch 1, dadurch gekennzeichnet, daß der erste und der zweite Anschluß die Anode bzw. die Katode der Photodiode sind, und daß der erste und der zweite Transistor (T2, T3) NMOS-Transistoren sind.

3. Photodetektor nach Anspruch 2, dadurch gekennzeichnet, daß der erste und der zweite Anschluß die Katode bzw. die Anode der Photodiode sind, und daß der erste und der zweite Transistor (T2, T3) PMOS-Transistoren sind.

4. Photodetektor nach einem der Ansprüche 1 bis 3, dadurch gekennzeichnet, daß der zweite Transistor (T3) vom gleichen Typ wie der erste ist und gleiche Dimensionen wie der erste oder dazu proportionale aufweist, und daß sein Gate-Anschluß und sein Source-Anschluß mit dem Gate-Anschluß bzw. dem Source-Anschluß des ersten verbunden sind.

5. Photodetektor nach einem der Ansprüche 1 bis 4, dadurch gekennzeichnet, daß der erste Transistor (T2) derart gewählt ist, daß er in der sogenannten Kennlinienzone mit schwacher Inversion arbeitet.

6. Photodetektor nach einem der Ansprüche 1 bis 5, dadurch gekennzeichnet, daß die Meßschaltung für den kopierten Strom eine von dem zweiten Transistor versorgte Integrationskapazität (Ci) und einen periodisch gesteuerten Schalter (K) aufweist, um die Kapazität vor jedem neuen Lesen zu entladen.

7. Photodetektor nach Anspruch 6, dadurch gekennzeichnet, daß ein Transistor (T4) mit der Integrationskapazität (Ci) parallelgeschaltet ist, um diese vor dem Laden aufgrund des Stroms zu entladen, der durch den zweiten Transistor (T3) fließt.

8. Photodetektor nach einem der vorhergehenden Ansprüche, dadurch gekennzeichnet, daß die Photodioden (D) in Form von Zeilen angeordnet sind.

9. Photodetektor nach einem der vorhergehenden Ansprüche, dadurch gekennzeichnet, daß die Photodioden (D) in Form von Matrizen angeordnet sind.

**Claims**

1. Photodetector comprising at least one photosensitive diode (D) and a circuit for reading the current generated by the photodiode, the read circuit including a nonlinear load (T2) which is connected to the terminals of the photodiode and can limit the voltage across the terminals of the photodiode, characterized in that the load consists of a first field-effect transistor (T2) whose gate is connected to the drain and to a first terminal of the photodiode and whose source is connected to the second terminal of the photodiode, and in that it furthermore includes a second transistor (T3) mounted as a current mirror with the first in order to replicate the current in the first transistor, and a circuit (Ci, Q2, K, A) for reading the current replicated in the second transistor.

2. Photodetector according to Claim 1, characterized in that the said first and second terminals are respectively the anode and the cathode of the photodiode, and in that the first and second transistors (T2, T3) are N-type MOS transistors.

3. Photodetector according to Claim 2, characterized in that the said first and second terminals are respectively the cathode and the anode of the photodiode, and in that the said first and second transistors (T2, T3) are P-type MOS transistors.

4. Photodetector according to one of Claims 1 to 3, characterized in that the second transistor (T3) is of the same type as the first and has dimensions equal or proportional to the first, and has its gate and its source connected respectively to the gate and to the source of the first.

5. Photodetector according to one of Claims 1 to 4, characterized in that the said first transistor (T2) is chosen so as to work in the characteristic zone referred to as weak inversion.

6. Photodetector according to one of Claims 1 to 5, characterized in that the circuit for measuring the replicated current includes an integration capacitor (Ci) supplied by the second transistor, and a switch (K) operated periodically to discharge the capacitor before each new reading operation.

7. Photodetector according to Claim 6, characterized in that a transistor (T4) is mounted in parallel with the said integration capacitor (Ci) so as to discharge the latter prior to the charging due to the current flow for the said second transistor (T3).

8. Photodetector according to any one of the preceding claims, characterized in that the photodiodes (D) are arranged in the form of linear arrays.

9. Photodetector according to any one of the preceding claims, characterized in that the photodiodes (D) are arranged in the form of matrices.

FIG.1

EP 0 692 907 B1

FIG.2

EP 0 692 907 B1